# EUROPÄISCHE PATENTSCHRIFT

(11) **EP 1 470 029 B1**
(45) Veröffentlichungstag und Bekanntmachung des Hinweises auf die Patenterteilung: **07.09.2005**
(21) Anmeldenummer: 03704469.0
(22) Anmeldetag: 26.01.2003
(51) Int. Cl.: B60R 22/22

(54) **GURTSCHLOSS MIT BEFESTIGUNGSVORRICHTUNG**
BELT LOCK WITH FASTENING DEVICE
BOUCLE DE CEINTURE MUNIE D'UN DISPOSITIF DE FIXATION

(30) Priorität: 01.02.2002 DE 10204090
(43) Veröffentlichungstag der Anmeldung: 27.10.2004
(73) Patentinhaber: AUTOLIV DEVELOPMENT AB, 447 83 Vargarda (SE)
(72) Erfinder: BORGWARD, Matthias, 22149 Hamburg (DE); KNOP, Henry, 22415 Hamburg (DE); SIEBRAND, Gerhard, 25251 Quickborn (DE); ALPERS, Eckhard, 21640 Nottendorf (DE)
(74) Vertreter: Müller, Karl-Ernst
(86) Internationale Anmeldenummer: PCT/EP2003/000771
(87) Internationale Veröffentlichungsnummer: WO 2003/064222

(56) Entgegenhaltungen:
- DE-A- 19 944 478
- US-A- 4 118 068

## Beschreibung

Die Erfindung betrifft ein Gurtschloß mit einem zur Montage an einem Fahrzeugteil eingerichteten Schloßhalter, wobei der Schloßhalter ein Loch zum Durchgriff eines mit dem Fahrzeugteil zu unterbindenden Befestigungsmittels derart aufweist, daß der Schloßhalter drehbar auf dem Befestigungsmittel gehalten ist, und wobei zwischen dem Fahrzeugteil und dem Schloßhalter eine den Schloßhalter in die Ruhestellung des Gurtschlosses vorspannende und sich mit ihrem einen Ende gegen den Schloßhalter und mit dem anderen Ende gegen das Fahrzeugteil abstützende Rückstellfeder mit spiralförmig angeordneten Federwindungen angeordnet ist.

Ein solches Gurtschloss ist aus DE 19944478 A1 bekannt und weiter ist ein Gurtschloß mit den gattungsgemäßen Merkmalen in der EP 0 854 070 B1 beschrieben. Damit sich das Gurtschloß zur Einstellung eines optimalen Gurtverlaufs aus seiner Ruhestellung bewegen kann, ist der Schloßhalter mit einem Langloch auf einem Befestigungsbolzen für den Schloßhalter drehbar gelagert, wobei das Langloch auch eine translatorische Bewegung des Gurtschlosses zum Befestigungsmittel ermöglicht. Zur Rückstellung des Gurtschlosses in seine Ruhestellung ist eine Spiralfeder mit einem ersten schraubenförmig ausgebildeten Spiralabschnitt vorgesehen, dessen Federwindungen bei gleichem Durchmesser der Federwindungen axial nebeneinander angeordnet sind und den Befestigungsbolzen umschließen. Zusätzlich ist ein zweiter Spiralabschnitt zwischen dem ersten Spiralabschnitt und dem sich am Gurtschloß abstützenden Ende der Feder angeordnet. Während der erste Spiralabschnitt der Rückstellfeder bei Drehung des Schloßhalters um den Befestigungsbolzen für dessen Rückstellung um die Drehachse sorgt, bewirkt der zweite Spiralabschnitt die Rückstellung des Schlosses nach dessen translatorischer Verschiebung.

Mit dem bekannten Gurtschloß ist der Nachteil einer entsprechend großen axialen Baubreite der Befestigungsanordnung für das Gurtschloß verbunden; weiterhin macht der wegen der translatorischen Rückstellung des Gurtschlosses vorgesehene zweite Spiralabschnitt die Rückstellung in ihrer Dimensionierung und Herstellung kompliziert.

Weiterhin ist aus der US 4 118 068 A eine Halterung für das Ende eines Sicherheitsgurtabschnitts bekannt, die um ihre Befestigung drehbar angeordnet ist. Zur Rückstellung der Halterung ist eine flache Spiralfeder vorgesehen, die mit ihrem inneren Ende an einem auf der Befestigung sitzenden Zwischenteil und mit ihrem äußeren Ende an der Halterung eingehängt ist, so daß die Rückstellkraft der Spiralfeder zwischen der Halterung und deren Befestigung wirkt.

Der Erfindung liegt die Aufgabe zugrunde, für ein Gurtschloß mit den gattungsgemäßen Merkmalen eine einfach aufgebaute und wirksame Rückstellung für den Schloßhalter bereitzustellen.

Die Lösung dieser Aufgabe ergibt sich einschließlich vorteilhafter Ausgestaltungen und Weiterbildungen aus dem Inhalt der Patentansprüche, welche dieser Beschreibung nachgestellt sind.

Die Erfindung sieht in ihrem Grundgedanken vor, daß die Rückstellfeder eine flache Spiralfeder mit in einer Ebene angeordneten Federwindungen ist, die zwischen dem Schloßhalter und einer Abdeckung als Widerlager angeordnet ist, wobei die Abdeckung mit einem ersten radialen Ansatz zur Einhängung des äußeren Endes der ebenen Spiralfeder und mit einem zweiten Ansatz als Anschlag für die Rückstellung des Schloßhalters versehen ist. Die Erfindung beinhaltet dabei die Erkenntnis, daß neben der Rückstellwirkung einer Spiralfeder mit in einer Ebene und mit nach außen anwachsendem Radius angeordneten Federwindungen um die durch ihr Zentrum verlaufende Drehachse eine translatorische Verschiebung des Schloßhalters mit dem daran eingehängten inneren Ende der Spiralfeder dessen tangentiale Bewegung in gleicher Weise wie die Spannung der Spiralfeder bei Drehbewegung des Schloßhalters um den Befestigungsbolzen bewirkt, ohne dafür einen besonderen Federverlauf einzurichten. Erfindungsgemäß ist die ebene Spiralfeder zwischen dem Schloßhalter und einer äußeren Abdeckung eingespannt, so daß die Federwindungen der ebenen Spiralfeder nicht ausweichen können. Zusätzlich ist durch die zweckmäßige Ausbildung der Abdeckung mit einem Anschlag für die Rückstellung des Schloßhalters eine zusätzliche Funktion der Abdeckung verwirklicht.

Mit der Erfindung ist der Vorteil verbunden, daß die axiale Baubreite der Befestigungsanordnung für den Schloßhalter an dem Fahrzeugteil wesentlich verringert ist, da ein Einbauraum nur noch für eine ebene Spiralfeder, also in der Größenordnung der Materialstärke des für die Herstellung der Spiralfeder üblicherweise eingesetzten Federdrahtes, vorgesehen sein muß. Es kommt hinzu, daß das Dauerlaufverhalten der erfindungsgemäß eingesetzten ebenen Spiralfeder gegenüber der nach dem Stand der Technik bekannten schraubenförmigen Spiralfeder besser ist.

Um den Schloßhalter in der Ruhestellung des Gurtschlosses an dem Fahrzeugteil sicher festzulegen, kann vorgesehen sein, daß dem zweiten radialen Ansatz diametral gegenüberliegend auf der anderen Seite der Mittellinie des Schloßhalters ein weiterer, dritter radialer Ansatz angeordnet ist, so daß der Schloßhalter in seiner Ruhestellung zwischen dem zweiten und dem dritten Ansatz eingespannt und somit in nur einer Drehrichtung drehbar ist.

Die nach einem Ausführungsbeispiel der Erfindung vorgesehene formschlüssige Festlegung der Abdeckung kann dabei zweckmäßig dadurch verwirklicht sein, daß der dritte Ansatz eine Öffnung zum Durchgriff eines am Fahrzeugteil befindlichen Zapfens aufweist.

Nach einem Ausführungsbeispiel der Erfindung ist vorgesehen, daß die Abdeckung eine Lageröffnung zum Durchgriff des Befestigungsmittels aufweist, so daß die Abdeckung insbesondere undrehbar gegenüber dem Fahrzeugteil festgelegt ist, so daß sie als Widerlager für die Rückstellfeder geeignet ist.

Nach einem Ausführungsbeispiel der Erfindung ist vorgesehen, daß die Abdeckung zusätzlich zu ihrer Befestigung mittels des Befestigungsmittels formschlüssig an dem Fahrzeugteil festgelegt ist.

Nach einem Ausführungsbeispiel der Erfindung ist vorgesehen, daß das äußere Ende der ebenen Spiralfeder an der Abdeckung festgelegt ist und das innere Ende der ebenen Spiralfeder an dem Schloßhalter angreift.

Zur Halterung des äußeren Endes der Spiralfeder kann vorgesehen sein, daß die Abdeckung mit einem ersten radialen Ansatz zur Einhängung des äußeren Endes der ebenen Spiralfeder und mit einem zweiten Ansatz als Anschlag für die Rückstellung des Schloßhalters versehen ist.

In der Zeichnung ist ein Ausführungsbeispiel der Erfindung wiedergegeben, welches nachstehend beschrieben ist. Es zeigen:
- Fig. 1: ein Gurtschloß mit Schloßhalter und Befestigungsmittel einschließlich Rückstellfeder in einer geschnittenen Seitenansicht,
- Fig. 2: den Gegenstand der Figur 1 in einer Vorderansicht.
- Fig. 3: den Gegenstand der Figur 1 in einer Rückansicht

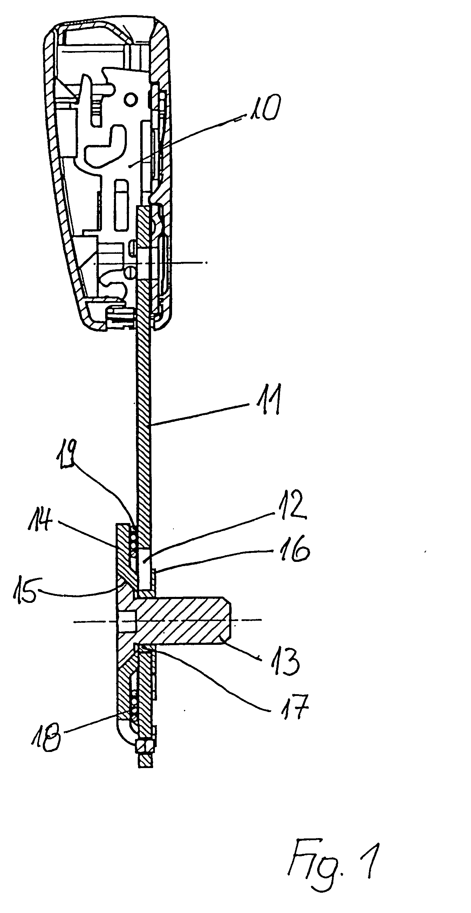

Wie zunächst Figur 1 zu entnehmen ist, ist ein Gurtschloß 10 fest mit einem Schloßhalter 11 verbunden, an dessen dem Gurtschloß 10 abgewandten Ende ein Langloch 12 zum Durchtritt einer Befestigungsschraube 13 ausgebildet ist, wobei die Befestigungsschraube 13 in ein nicht dargestelltes Fahrzeugteil als Träger des Schloßhalters 11 mit Gurtschloß 12 eindrehbar ist. Auf der dem Schraubenschaft abgekehrten Seite ist eine das untere Ende des Schloßhalters 11 mit Langloch 12 überdeckende Abdeckung 14 vorgesehen, die eine Lageröffnung 15 mit einer Einsenkung für den Schraubenkopf der Befestigungsschraube 13 aufweist, so daß die Befestigungsschraube 13 bündig in der Abdeckung 14 liegt. Auf der gegenüberliegenden Seite ist auf dem Schraubenschaft der Befestigungsschraube 13 eine Unterlegscheibe 16 angeordnet, die mit einem Kragen 17 in das Langloch 12 des Schloßhalters 11 hineinreicht, so daß der Kragen 17 der Unterlegscheibe 16 einerseits als Drehlager für den Schloßhalter 11 und andererseits als Führung für die translatorische Verschiebung des Schloßhalters 11 mit dem Langloch 12 auf den Kragen 17 dient.

Zwischen dem Schloßhalter 11 und der Abdeckung 14 ist eine Spiralfeder 18 als Rückstellfeder angeordnet, deren Windungen 19 in einer Ebene mit einem von innen nach außen anwachsenden Radius verlaufen; das innere Ende der Spiralfeder 18 ist dabei an dem Schloßhalter 11 eingehängt, während das äußere Ende der Spiralfeder 18 an der Abdeckung 14 festgelegt ist.

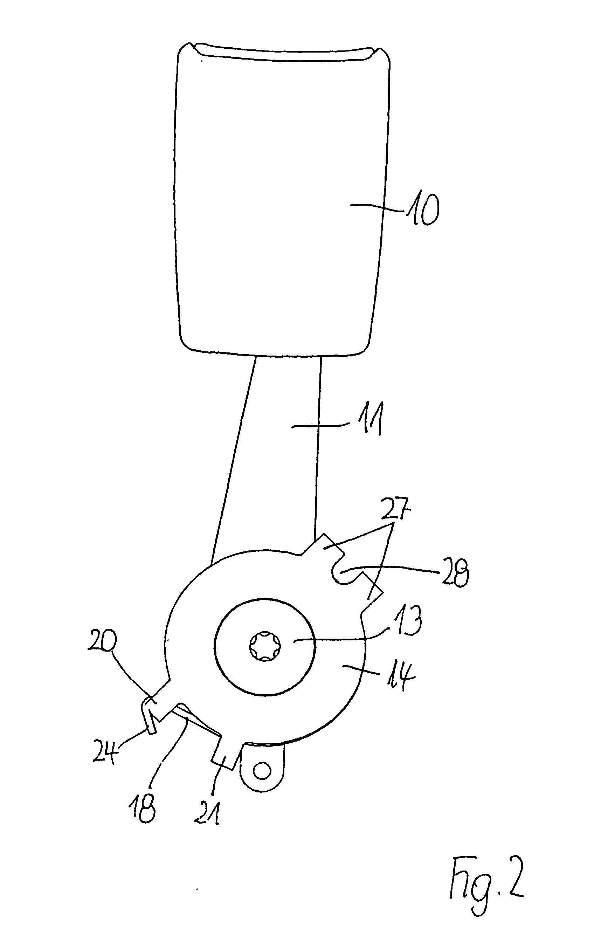

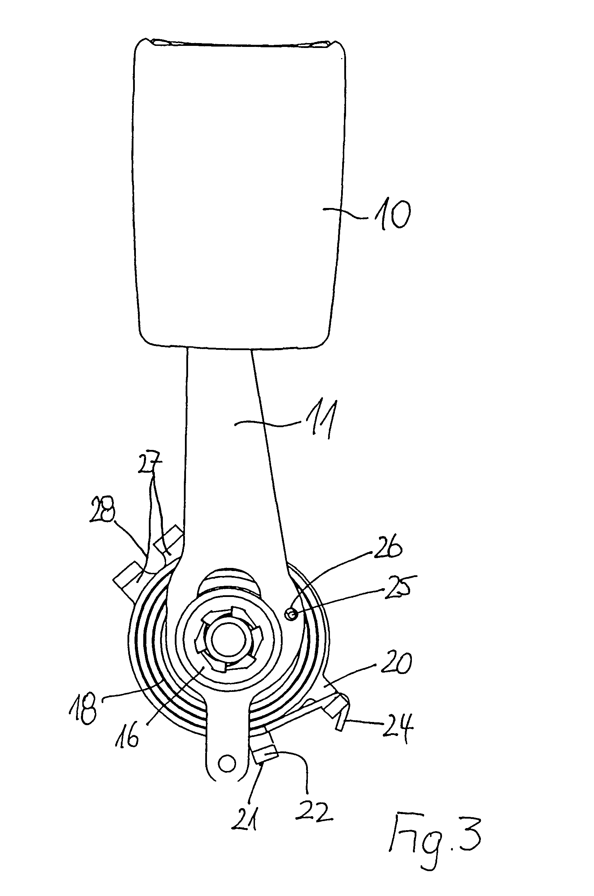

Wie aus den Figuren 2 und 3 ersichtlich, weist die Abdeckung 14 einen ersten radialen Ansatz 20 zur Einhängung des äußeren Endes 24 der Spiralfeder 18 auf, ferner einen zweiten Ansatz 21 als Anschlag für die Rückstellung des Schloßhalters 11. Die Anschläge 20, 21 weisen hierzu in die Ebene des Schloßhalters 11 reichende Abkröpfungen 22 auf. Wie im einzelnen aus Figur 3 ersichtlich, ist das innere Ende 25 der Spiralfeder 18 in eine Öffnung 26 des Schloßhalters 11 eingehängt. Schließlich ist dem zweiten radialen Ansatz 21 diametral gegenüberliegend auf der anderen Seite der Mittellinie des Schloßhalters 11 ein weiterer, dritter radialer Ansatz 27 angeordnet, der eine Öffnung 28 zum Durchgriff eines an dem nicht dargestellten Fahrzeugteil befindlichen ebenfalls nicht dargestellten Zapfens zur formschlüssigen Festlegung der Abdeckung 14 an dem Fahrzeugteil aufweist. Somit ist der Schloßhalter 11 in seiner Ruhestellung zwischen dem zweiten Ansatz 21 und dem dritten Ansatz 27 eingespannt und in nur einer Drehrichtung drehbar.

Bei Drehung des Schloßhalters 11 um die durch die Befestigungsschraube 13 verkörperte Drehachse und um den Kragen 17 der Unterlegscheibe 16 wird die ebene Spiralfeder 18 gespannt, so daß nach Abschluß der Drehbewegung aufgrund der gespannten Spiralfeder 18 der Schloßhalter 11 wieder in seine Ausgangsstellung zurückgedreht wird. Wird der Schloßhalter 11 mit dem Langloch 12 auf dem Kragen 17 der Unterlegscheibe 16 verschoben, so wird das innere Ende der ebenen Spiralfeder gegenüber dem an der äußeren Abdeckung 14 festgelegten äußeren Ende der ebenen Spiralfeder 18 verschoben, so daß der Schloßhalter 11 von dem ausgelenkten und damit gespannten inneren Ende der ebenen Spiralfeder 18 wieder in seine Ruhestellung zurückbewegt wird.

## Patentansprüche

1. Gurtschloß (10) mit einem zur Montage an einem Fahrzeugteil eingerichteten Schloßhalter (11), wobei der Schloßhalter (11) ein Loch (12) zum Durchgriff eines mit dem Fahrzeugteil zu verbindenden Befestigungsmittels (13) derart aufweist, daß der Schloßhalter (11) drehbar auf dem Befestigungsmittel (13) gehalten ist, und wobei zwischen dem Fahrzeugteil und dem Schloßhalter (11) eine den Schloßhalter (11) in die Ruhestellung des Gurtschlosses (10) vorspannende und sich mit ihrem einen Ende gegen den Schloßhalter (11) und mit dem anderen Ende gegen das Fahrzeugteil abstützende Rückstellfeder (18) mit spiralförmig angeordneten Federwindungen angeordnet ist, **dadurch gekennzeichnet, daß** die Rückstellfeder (18) eine flache Spiralfeder (18) mit in einer Ebene angeordneten Federwindungen (19) ist, die zwischen dem Schloßhalter (11) und einer Abdeckung (14) als Widerlager angeordnet ist, wobei die Abdeckung (14) mit einem ersten radialen Ansatz (20) zur Einhängung des äußeren Endes (24) der ebenen Spiralfeder (18) und mit einem zweiten Ansatz (21) als Anschlag für die Rückstellung des Schloßhalters (11) versehen ist..

2. Gurtschloß nach Anspruch 1, **dadurch gekennzeichnet, daß** dem zweiten radialen Ansatz (21) diametral gegenüberliegend auf der anderen Seite der Mittellinie des Schloßhalters (11) ein weiterer, dritter radialer Ansatz (27) angeordnet ist, so daß der Schloßhalter (11) in seiner Ruhestellung zwischen dem zweiten (21) und dem dritten Ansatz (27) eingespannt und somit in nur einer Drehrichtung drehbar ist.

3. Gurtschloß nach Anspruch 2, **dadurch gekennzeichnet, daß** der dritte Ansatz (27) eine Öffnung (28) zum Durchgriff eines am Fahrzeugteil befindlichen Zapfens zur formschlüssigen Festlegung der Abdeckung (14) an dem fahrzeugfesten Teil aufweist.

4. Gurtschloß nach einem der Ansprüche 1 bis 3, **dadurch gekennzeichnet, daß** die Abdeckung (14) eine Lageröffnung (15) zum Durchgriff des Befestigungsmittels (13) aufweist.

5. Gurtschloß nach einem der Ansprüche 1 bis 4, **dadurch gekennzeichnet, daß** die Abdeckung (14) undrehbar gegenüber dem Fahrzeugteil festgelegt ist.

6. Gurtschloß nach einem der Ansprüche 1 bis 5, **dadurch gekennzeichnet, daß** die Abdeckung (14) formschlüssig an dem Fahrzeugteil festgelegt ist.

7. Gurtschloß nach einem der Ansprüche 1 bis 6, **dadurch gekennzeichnet, daß** das innere Ende (25) der ebenen Spiralfeder (18) an dem Schloßhalter (11) angreift.

## Claims

1. Belt buckle (10) having a buckle holder (11) that is adapted to be mounted on a vehicle part, whereby the buckle holder (11) is provided with a hole (12) for the extension therethrough of a fastening means (13) that is to be connected to the vehicle part in such a way that the buckle holder (11) is rotatably held on the fastening means (13), and whereby a readjusting spring (18) having spirally arranged spring windings is disposed between the vehicle part and the buckle holder (11) whereby the readjusting spring biases the buckle holder (11) into the rest position of the belt buckle (10), and one end of the spring is supported against the buckle holder (11) and the other end is supported against the vehicle part, **characterized in that** the readjusting spring (18) is a flat spriral spring (18) having spring windings (19) that are disposed in a single plane and are disposed between the buckle holder (11) and a cover (14) as a counter-bearing, wherein the cover (14) has a first radially extending extension (20) for the support of the outer end of the spiral spring (18), and wherein the cover (14) has a second extension (21) as a stop for a readjusting of said buckle holder (11).

2. Belt buckle according to claim 1, **characterized in that** the cover (14) has a further third radially extending extension (27) that is disposed diametrically across from the second radially extending extension (21) on an opposite side of a center line of said buckle holder (11) wherein the buckle holder (11), in said rest position, is tensioned between the second extension (21) and the third extension (27) and is thus pivotable in only one direction of rotation.

3. Belt buckle according to claim 2, **characterized in that** the third extension (27) is provided with an opening (28) for extension therethrough of a pin that is disposed on the vehicle part for a positive fixing of the cover (14) on the vehicle part.

4. Belt buckle according to one of the claims 1 to 3, **characterized in that** the cover (14) is provided with a mounting opening (15) for extension therethrough of said fastening means (13).

5. Belt buckle according to one of the claims 1 to 4, **characterized in that** the cover (14) is non-rotatably secured relative to the vehicle part.

6. Belt buckle according to one of the claims 1 to 5, **characterized in that** the cover (14) is positively fixed in position on the vehicle part.

7. Belt buckle according to one of the claims 1 to 6, **characterized in that** the inner end (25) of the flat spiral spring (18) engages against said buckle holder (11).

## Revendications

1. Bloqueur de ceinture (10) comportant un porte-bloqueur (11) conçu pour être monté sur un élément du véhicule, le porte-bloqueur (11) étant muni d'un trou (12) pour le passage d'un moyen de fixation (13) à assembler à l'élément du véhicule, de telle sorte que le porte-bloqueur (11) est maintenu rotatif sur le moyen de fixation (13), et un ressort de rappel (18) avec des spires en forme de spirale étant agencé entre l'élément du véhicule et le porte-bloqueur (11), lequel ressort précontraint le porte-bloqueur (11) dans la position de repos du bloqueur de ceinture (10) et s'appuie avec une extrémité contre le porte-bloqueur (11) et avec l'autre extrémité contre l'élément du véhicule, **caractérisé en ce que** le ressort de rappel (18) est un ressort spirale plat (18) avec des spires (19) agencées dans un plan, lequel est agencé sous forme de contre-butée entre le porte-bloqueur (11) et un couvercle (14), le couvercle (14) étant muni d'une première saillie (20) radiale pour y accrocher l'extrémité extérieure (24) du ressort spirale (18) plat et une deuxième saillie (21) formant une butée pour la position de rappel du porte-bloqueur (11).

2. Bloqueur de ceinture selon la revendication 1, **caractérisé en ce qu'**une troisième saillie radiale (27) supplémentaire est diamétralement opposée à la deuxième saillie radiale (21) sur l'autre côté de la ligne médiane du porte-bloqueur (11), de telle sorte que le porte-bloqueur (11) est serré dans sa position de repos entre la deuxième (21) et la troisième saillie (27) et ne peut donc tourner que dans un sens de rotation.

3. Bloqueur de ceinture selon la revendication 2, **caractérisé en ce que** la troisième saillie (27) comporte un orifice (28) pour le passage d'un pivot monté sur l'élément du véhicule en vue de fixer le couvercle (14) par conjugaison de forme contre l'élément du véhicule.

4. Bloqueur de ceinture selon l'une quelconque des revendications 1 à 3, **caractérisé en ce que** le couvercle (14) comporte un logement débouchant (15) pour le passage du moyen de fixation (13).

5. Bloqueur de ceinture selon l'une quelconque des revendications 1 à 4, **caractérisé en ce que** le couvercle (14) est fixé de manière immobile en rotation par rapport à l'élément du véhicule.

6. Bloqueur de ceinture selon l'une quelconque des revendications 1 à 5, **caractérisé en ce que** le couvercle (14) est fixé par conjugaison de forme sur l'élément du véhicule.

7. Bloqueur de ceinture selon l'une quelconque des revendications 1 à 6, **caractérisé en ce que** l'extrémité intérieure (25) du ressort spirale (18) plat est en prise avec le porte-bloqueur (11).
